# EUROPÄISCHE PATENTSCHRIFT

(11) **EP 4 460 643 B1**
(45) Veröffentlichungstag und Bekanntmachung des Hinweises auf die Patenterteilung: **19.02.2025**
(21) Anmeldenummer: 24710053.0
(22) Anmeldetag: 06.03.2024
(51) Int. Cl.: F16B 21/04

(54) **BAUGRUPPE MIT BAJONETTVERSCHLUSS**
ASSEMBLY HAVING A BAYONET CLOSURE
ENSEMBLE AYANT UNE FERMETURE À BAÏONNETTE

(30) Priorität: 31.03.2023 DE 202023101645 U
(43) Veröffentlichungstag der Anmeldung: 13.11.2024
(73) Patentinhaber: Zumtobel Lighting GmbH, 32657 Lemgo (DE)
(72) Erfinder: HILDEBRAND, Benjamin, 32791 Lage (DE); SULZBACH, Lennart, 32760 Detmold (DE)
(74) Vertreter: Kiwit, Benedikt
(86) Internationale Anmeldenummer: PCT/EP2024/055809
(87) Internationale Veröffentlichungsnummer: WO 2024/199921

(56) Entgegenhaltungen:
- DE-U1- 202021 000 598
- US-A1- 2022 082 220
- US-B1- 9 920 912
- US-B2- 10 605 420

## Beschreibung

Die vorliegende Erfindung betrifft eine Baugruppe mit einem Bauteilkörper und einem Befestigungskörper, welche über einen Bajonettverschluss miteinander verbindbar sind.

Baugruppen der eingangs genannten Art sind aus dem Stand der Technik grundsätzlich bekannt. Bei diesen Baugruppen kann es sich beispielsweise um elektrisch betriebene Baugruppen, wie Leuchten, handeln. Um aus dem geschlossenen bzw. verbundenen Betriebszustand heraus ein Lösen bzw. Entfernen des Bauteilkörpers von dem Befestigungskörper - insbesondere mit einer Hand - zu erschweren oder zu vermeiden, sind unterschiedliche Sicherungsmöglichkeiten bekannt. Beispielsweise können Seile vorgesehen sein, um den Bauteilkörper auch im gelösten Zustand des Bajonettverschlusses an dem Befestigungskörper zu halten. Ebenso sind Bajonettverschlüsse mit einer einfachen Fallsicherung bekannt, welche jedoch vergleichsweise einfach zu überwinden ist. Auch können einfache Federsicherungen eingebaut sein, um das Lösen des Bauteilkörpers gegenüber dem Befestigungskörper zu sichern; beispielsweise, indem der Bajonettvorsprung in eine Verriegelungsposition hin vorgespannt in der Bajonettnut gehalten wird. Diese bekannten Sicherungsmechanismen sind entweder sichtbar und somit ästhetisch wenig ansprechend oder sie sind vergleichsweise aufwändig und teuer umzusetzen oder sie lassen sich leicht überwinden und sind somit nur bedingt als Sicherung geeignet.

Die DE 20 2021 000598 U1 zeigt decken- bzw. wandmontierte Elektrogeräte, die ein Gehäuse und eine Halterung für das Gehäuse aufweisen. Das Gehäuse verfügt über Nuten in seinen Seitenteilen, die beim Befestigen des Gehäuses an der Halterung Verschraubungen der Halterung aufnehmen. Um während der Elektroinstallation das Gehäuse von der Halterung tragen zu lassen, ohne eine Lüsterklemme oder ähnliche Anschlusskomponenten zu verdecken, sind die Nuten jeweils um Flanken ergänzt, die parallel zur wand- bzw. deckenlagernden Kante des Gehäuses verlaufen und bis in die Nähe zweier Gehäuseecken führen. Nach dem Entlangführen der Verschraubungen in den Flanken der Nute erreicht das Gehäuse eine Lage, die aufgrund von Aussparungen an der Halterung ein Anklappen des Gehäuses relativ zur Decke bzw. Wand ermöglicht. Nach Abschluss der elektrischen Installation wird das Gehäuse so verschoben, dass sich die Verschraubungen entlang der Nuten zu den endgültigen Haltepositionen in den Nuten bewegt haben. Durch das Anziehen der Verschraubungen wird eine sichere, aber bei Bedarf lösbare Befestigung hergestellt.

Die US 9,920,912 B1 zeigt eine Verbindung von einer Vorrichtung an einer Halterung, welche mittels in Bolzen eingehängten Haken gesichert wird. US 2022/082220 A1 zeigt eine untere Endabdeckung, an der ein Leuchtenkörper verbindbar ist, wobei die Verbindung mittels eines elastischen Arms gesichert werden kann. Es ist somit eine Aufgabe der vorliegenden Erfindung, eine Baugruppe der eingangs genannten Art bereitzustellen, welche einen einfachen aber wirkungsvollen und bevorzugt ästhetisch ansprechenden Sicherungsmechanismus aufweist.

Diese Aufgabe wird durch den Gegenstand des unabhängigen Anspruchs gelöst. Die abhängigen Ansprüche bilden den zentralen Gedanken der vorliegenden Erfindung in besonders vorteilhafter Weise weiter.

Gemäß einem ersten Aspekt betrifft die vorliegende Erfindung eine Baugruppe mit einem Bauteilkörper und einem Befestigungskörper zur Befestigung des Bauteilkörpers. Der Bauteilkörper ist mit dem Befestigungskörper über einen Bajonettverschluss der Baugruppe verbindbar. Der Bajonettverschluss weist dabei einen (beispielsweise Bauteilkörper-seitigen) Bajonettvorsprung sowie eine (beispielsweise Befestigungskörper-seitige) Bajonettnut auf, in und entlang welcher der Bajonettvorsprung führbar ist. Die Bajonettnut weist dabei einen Einführabschnitt auf, über den der Bajonettvorsprung in eine Einführrichtung in die Bajonettnut einführbar ist. Des Weiteren weist die Bajonettnut einen Funktionsabschnitt auf, welcher sich seitlich bezüglich der Einführrichtung vom Einführabschnitt weg erstreckt und an einem distalen Ende desselben in einem Verriegelungsabschnitt zum Festlegen des Bajonettvorsprungs mündet, in dem der Bajonettvorsprung in einer Verriegelungsposition festlegbar ist. Die Bajonettnut weist des Weiteren einen Blockierabschnitt auf, welcher den Funktionsabschnitt mit dem Einführabschnitt verbindet. Der Blockierabschnitt kann bevorzugt dem Einführabschnitt in Einführrichtung nachgelagert und/oder seitlich bezüglich der Einführrichtung zum Funktionsabschnitt hin vom Einführabschnitt abzweigend vorgesehen sein. Die Bajonettnut weist ferner einen zwischen dem Blockierabschnitt und dem Verriegelungsabschnitt sich von dem Funktionsabschnitt entgegen der Einführrichtung weg erstreckenden Taschenabschnitt auf, in welchem der Bajonettvorsprung in einer Halteposition wenigstens teilweise aufnehmbar ist. Die Baugruppe weist ferner ein Blockierelement auf, welches wahlweise in dem Blockierabschnitt in einer Blockierposition positionierbar ist, um einen Durchgang in der Bajonettnut zwischen dem Einführabschnitt und dem Funktionsabschnitt für den Bajonettvorsprung zu blockieren. Die Baugruppe (beispielsweise der Bauteilkörper) ist derart ausgebildet, dass der Blockierabschnitt in der Halteposition wenigstens teilweise derart freigelegt ist, um das Blockierelement in dem Blockierabschnitt zu positionieren.

Mittels der vorbeschriebenen Ausgestaltung der Baugruppe wird folglich ein Taschenabschnitt in der Bajonettnut bereitgestellt, der es ermöglicht, dass durch das Einführen des Bajonettvorsprungs in diesen Taschenabschnitt in die Halteposition der Bauteilkörper und der Befestigungskörper bezüglich der Einführrichtung derart zueinander versetzt werden, sodass der Blockierabschnitt zum Positionieren des Blockierelements darin entsprechend freigelegt ist. Durch die Aufnahme des Bajonettvorsprungs in dem Taschenabschnitt können so der Bauteilkörper und der Befestigungskörper in einer sicheren und bevorzugt eingehängten Position (Halteposition) gesichert werden, was das Handling für einen Monteur erleichtert. In dieser Position kann durch das definierte Freilegen des Blockierabschnitts sodann eine Sicherung in der Bajonettnut vorgesehen werden, mittels der ein Lösen des Bajonettvorsprungs aus der Bajonettnut blockiert und somit eine Trennung des Bajonettverschlusses vermieden werden kann. Der Bajonettverschluss kann anschließend durch Überführen des Bajonettvorsprungs in die und Festlegen desselben in der Verriegelungsposition geschlossen bzw. gesichert werden. Zum Lösen kann der Bajonettvorsprung dann wieder einfach aus der Verriegelungsposition in die Halteposition überführt werden, wodurch der Blockierabschnitt wiederum entsprechend freigelegt wird. Durch Entfernen des Blockierelements aus dem Blockierabschnitt bzw. aus der Blockierposition kann die Blockierwirkung sodann gelöst werden; dies aufgrund der Halteposition bevorzugt in einer für den Monteur einfachen Weise. Der Bajonettvorsprung kann sodann über den wieder freigelegte Blockierabschnitt in den Einführabschnitt und dann aus der der Bajonettnut geführt werden, um die Baugruppe zu demontieren. Somit wird eine einfache aber wirkungsvolle Sicherung einer entsprechenden Baugruppe bereitgestellt. Der Taschenabschnitt wirkt dabei bevorzugt als Falltasche, welcher gleichzeitig den Bauteilkörper und den Befestigungskörper relativ zueinander sichert sowie den Blockierabschnitt zum Positionieren bzw. Entfernen des Blockierelements in bzw. aus der Blockierposition zugänglich macht. Durch die einfache Ausgestaltung kann ein vergleichsweise günstiger aber sicherer Bajonettverschluss bereitgestellt werden. Zudem ist eine Montage bzw. Demontage einfach aber sicher und bequem durchführbar.

Der Bauteilkörper weist bevorzugt den Bajonettvorsprung auf, und der Befestigungskörper weist bevorzugt die Bajonettnut auf. Auf diese Weise kann eine bevorzugte Ausgestaltung der Baugruppe bereitgestellt werden, in der der oft das ästhetische Erscheinungsbild bestimmende Bauteilkörper den weniger auffälligen Teil des Bajonettverschlusses, nämlich den Bajonettvorsprung, aufweist. Auch lässt sich so der Bajonettverschluss effektiver kaschieren. Grundsätzlich kann auch der Befestigungskörper den Bajonettvorsprung aufweisen, und der Bauteilkörper die Bajonettnut aufweisen.

Das Blockierelement kann derart (beispielsweise an dem Befestigungskörper) vorgesehen sein, um in der Halteposition wahlweise zwischen der Blockierposition und einer Freigabeposition, in der das Blockierelement den Durchgang in der Bajonettnut zwischen dem Einführabschnitt und dem Funktionsabschnitt für den Bajonettvorsprung freigibt, bewegbar zu sein. Durch die definierte Bewegbarkeit des Blockierelements in der Baugruppe kann das Blockierelement in dieser verbleiben. Dies vereinfacht zum einen die Montage der Bauteile unter Verwendung des Bajonettverschlusses. Zum anderen kann das Blockierelement bevorzugt verliersicher bereitgestellt werden. Grundsätzlich ist es aber auch denkbar, dass das Blockierelement zum Freilegen des Durchgangs entfernt bzw. abgenommen wird, und zum Positionieren im Blockierabschnitt entsprechend befestigt wird.

Das Blockierelement weist bevorzugt eine Schraube auf oder ist eine Schraube. Somit kann ein einfaches Mittel als Blockierelement bereitgestellt werden, welches sowohl einfach als auch intuitiv bedienbar ist. Eine Schraube ist überdies einfach bereitzustellen; so kann sich vorzugsweise eines Standardelements bedient werden. Zudem kann eine Aufnahme des Blockierelements so beispielsweise in Form eines einfachen Innengewindes (bspw. als Gewindebohrung) bereitgestellt werden. Gemäß einer besonders bevorzugten Ausgestaltungsform ist das Blockierelement ein Gewindestift oder weist diesen auf. Somit kann ein besonders einfaches und leicht verfügbares Bauteil als Blockierelement verwendet werden.

Die Schraube ist bevorzugt derart ausgebildet und vorgesehen, um durch eine Schraubbewegung der Schraube zwischen der Blockierposition und der Freigabeposition bewegt zu werden. Somit wird eine besonders einfache Bereitstellung und Bedienung eines entsprechenden Blockierelements ermöglicht. Zudem kann so bevorzugt eine Befestigung mittels Bajonettverschluss bereitgestellt werden, welche auch hohen Sicherheitsanforderungen (wie bspw. in DIN EN IEC 60598 vorgeschrieben) gerecht werden kann. So ist es oft vorgeschrieben, dass insbesondere Abdeckungen oder Gehäuse zur Vermeidung eines elektrischen Schlags nicht mit einer Hand gelöst bzw. entfernt werden dürfen.

Das Blockierelement kann bevorzugt ein Schraubenmitnahmeprofil (beispielsweise einen Schlitz, einen Kreuzschlitz, einen Innensechskant, einen Innensechsrund, etc.) aufweisen, um das Blockierelement in einfacher Weise und mit gängigen Werkzeugen in ein entsprechendes Gewinde einzudrehen bzw. zwischen der Blockierposition und der Freigabeposition zu bewegen.

Das Blockierelement weist bevorzugt ein Druckstück mit einem beweglichen Druckteil auf, wobei das Druckteil mit einer Druckfeder in die Blockierposition bzw. zu der Blockierposition hin vorgespannt ist, um den Durchgang in der Bajonettnut zwischen dem Einführabschnitt und dem Funktionsabschnitt für den Bajonettvorsprung zu blockieren. Somit wird ein gängiges und leicht verfügbares Bauteil als Blockierelement bereitgestellt. Das Druckstück weist bevorzugt eine Hülse, die Druckfeder und das Druckteil auf. Das Druckteil ist in der Hülse längsbeweglich zwischen einem Boden (so dass das Druckteil bevorzugt (im Wesentlichen) vollständig in der Hülse aufgenommen ist) und einer gegenüberliegenden Öffnung (so dass das Druckstück teilweise aus der Hülse über die Öffnung vorragt) der Hülse aufgenommen. Zwischen dem Druckteil und dem Boden ist die Druckfeder angeordnet, um das Druckteil zur Öffnung hin vorzuspannen. Die Hülse weist im Bereich der Öffnung einen Anschlag für das Druckstück auf, um das Druckstück verliersicher in der Hülse zu halten. Die Hülse kann als separates Bauteil bereitgestellt werden oder auch integral in der Baugruppe (bspw. Bauteilkörper oder Befestigungskörper) vorgesehen sein. Die Druckfeder ist bevorzugt aus Edelstahl hergestellt. Das Druckteil weist bevorzugt eine Kugel auf, welche bspw. aus Edelstahl oder Polyoxymethylene (POM) hergestellt ist. Beispielsweise kann das Druckstück - bspw. dessen Hülse - ein Außengewinde (und somit eine Schraube) aufweisen, um entsprechend in der Baugruppe aufgenommen zu werden und das Druckteil in der Blockierposition zu positionieren. Auch ist es denkbar, dass das Druckstück kraftschlüssig (bspw. durch Selbstklemmung) in der Baugruppe aufgenommen wird, um das Druckteil (zunächst) in der Blockierposition zu positionieren; hierzu ist die Hülse bevorzugt aus einem Kunststoff (bevorzugt ein Thermoplast) hergestellt, und kann so einfach in eine korrespondierende Ausnehmung in der Baugruppe eingesetzt bzw. eingepresst werden.

Das Druckstück ist bevorzugt derart ausgebildet und vorgesehen, dass das Druckteil entgegen der Vorspannung der Druckfeder wahlweise von der Blockierposition in die Freigabeposition überführbar ist; also beispielsweise von der Öffnung weg zum Boden der Hülse hin in die Hülse hineinbewegt wird. Auf diese Weise lassen sich der Bauteilkörper und der Befestigungskörper in einfacher Weise verbinden, während durch die Vorspannung des Druckstücks eine gute Sicherung des Bajonettverschlusses bereitgestellt wird. Da das Druckstück zu der Blockierposition hin vorgespannt ist, drängt es automatisch in diese zurück und ermöglicht so ein sicheres Blockieren des Bajonettvorsprungs in dem genannten Durchgang der Bajonettnut.

Der Bauteilkörper nimmt bevorzugt den Befestigungskörper in der Verriegelungsposition wenigstens teilweise oder vollständig auf. Somit kann ein in der Regel funktionales Befestigungsbauteil, wie der Befestigungskörper, von einem in der Regel als funktional ästhetisches Bauteil, wie der Bauteilkörper, effektiv kaschiert werden. Zudem kann so eine kompakte Bauform ermöglicht werden.

Die Baugruppe ist bevorzugt derart ausgebildet, sodass die Bajonettnut in der Verriegelungsposition vollständig abgedeckt ist; dies vorzugsweise durch den Bauteilkörper. Somit wird der Bajonettverschluss in einfacher und effektiver Weise in der Verriegelungsposition kaschiert, während gleichzeitig eine effektive Zugänglichkeit zur Sicherung des Bajonettverschlusses über das Blockierelement bewerkstelligt wird.

Der Blockierabschnitt zweigt bevorzugt von einem bezüglich der Einführrichtung distalen Ende des Einführabschnitts ab; dies bevorzugt in Einführrichtung nachgelagert oder seitlich zur Einführrichtung. Bevorzugt zweigt der Blockierabschnitt von einem einer Einführöffnung (für den Bajonettvorsprung in die Bajonettnut) gegenüberliegenden Ende des Einführabschnitts entsprechend ab. Somit wird eine insgesamt einfache Struktur der Bajonettnut bereitgestellt, welche folglich einfach herstellbar ist und sich zudem intuitiv bedienen lässt.

Der Funktionsabschnitt verjüngt sich bevorzugt zum Verriegelungsabschnitt hin. Auf diese Weise wird eine einfache aber wirkungsvolle Verbindung mittels des Bajonettverschlusses bereitgestellt.

Der Funktionsabschnitt weist bevorzugt eine in Einführrichtung weisende und sich zum Verriegelungsabschnitt hin in Einführrichtung geneigte Anlaufschräge auf. Diese Anlaufschräge ermöglicht eine intuitive und einfache Verbindung des Bajonettverschlusses bei Überführen des Bajonettvorsprungs in die Verriegelungsposition; mithin bei Einführen des Bajonettvorsprungs in den Verriegelungsabschnitt der Bajonettnut.

Der Bauteilkörper und der Befestigungskörper weisen bevorzugt jeweils bezüglich der Einführrichtung aufeinander zu gerichtete Anlageseiten auf, wobei der Bajonettverschluss derart ausgebildet ist, dass die Anlageseiten in der Verriegelungsposition gegeneinander gedrückt sind; dies vorzugsweise durch Abstützung des Bajonettvorsprungs gegenüber dem Verriegelungsabschnitt oder der Anlaufschräge. Auf diese Weise kann eine großflächige Verbindungsfläche zwischen Bauteilkörper und Befestigungskörper bereitgestellt werden, um somit eine wirkungsvolle Verbindung dieser Bauteile in der Verriegelungsposition zu gewährleisten. Dabei kann bevorzugt die Anlaufschräge dazu dienen, um in einfacher Weise die Anlageseiten in der Verriegelungsposition gegeneinander zu drücken; mithin kann diese also als Abstützung des Bajonettvorsprungs dienen.

Die Anlaufschräge kann somit entweder als Abstützung zum Gegeneinanderpressen der Anlageseiten dienen und/oder die zuvor beschriebene Verjüngung des Verriegelungsabschnitts in einfacher Weise bereitstellen.

In einer bevorzugten Ausgestaltungsform kann zwischen den beiden Anlageseiten eine bevorzugt umlaufend geschlossene Dichtung vorgesehen sein, um die Baugruppe in diesem Verbindungsbereich gemäß einer gewünschten IP Schutzklasse abzudichten.

Der Bajonettvorsprung kann bevorzugt einen runden oder eckigen Querschnitt in dessen Vorsprungsrichtung gesehen aufweisen. So kann der Bajonettvorsprung bevorzugt als Stift oder als Klotz ausgebildet sein. Insgesamt kann so der Bajonettvorsprung in einfacher aber wirkungsvoller Weise bereitgestellt werden.

Vorzugsweise kann die Baugruppe mehrere der Bajonettverschlüsse aufweisen, welche bevorzugt symmetrisch oder gleichmäßig verteilt vorgesehen sind. Somit kann die Wirkung der Verbindung über den Bajonettverschluss entsprechend verstärkt und die Verbindung insgesamt besonders sicher bereitgestellt werden. Auch kann so die Last der Verbindung gleichmäßig auf die entsprechenden Bajonettverschlüsse verteilt werden. Die Baugruppe kann dann für wenigstens einen, mehrere oder alle der Bajonettverschlüsse entsprechende Blockierelemente aufweisen. In wenigstens einem, mehreren oder allen der Blockierabschnitte kann dann ein entsprechendes Blockierelement in der Blockierposition positioniert werden.

Die Baugruppe weist bevorzugt in Einführrichtung gesehen eine eckige und vorzugsweise eine viereckige Grundform oder Kontur auf. Alternativ ist es denkbar, dass die Baugruppe in Einführrichtung gesehen eine runde und vorzugsweise eine kreisrunde Grundform oder Kontur aufweist. Grundsätzlich kann die Baugruppe in Einführrichtung gesehen jede beliebige Grundform oder Kontur aufweisen. Die beiden vorgenannten (eckig und rund) stellen dabei die in der Regel gängigsten und ästhetisch ansprechendsten Grundformen bzw. Konturen entsprechender Baugruppen dar.

Die Baugruppe kann bevorzugt an zwei gegenüberliegenden Seiten jeweils wenigstens einen der Bajonettverschlüsse aufweisen. Somit kann eine gleichmäßige Verteilung der Verbindungswirkung insbesondere bei eckigen Baugruppen aber auch bei andersartig geformten Baugruppen, wie beispielsweise runde Baugruppen, erzielt werden. Bei eckigen Baugruppen können die gegenüberliegenden Bajonettverschlüsse so bevorzugt durch translatorische Relativbewegung zwischen Bauteilkörper und Befestigungskörper in die Verriegelungsposition eingeführt werden. Bei runden Baugruppen können die gegenüberliegenden Bajonettverschlüsse so bevorzugt durch rotatorische Relativbewegung zwischen Bauteilkörper und Befestigungskörper in die Verriegelungsposition eingeführt werden.

Die Baugruppe kann bevorzugt mehrere der Bajonettverschlüsse entlang eines Kreises und vorzugsweise über diesen Kreis gleichmäßig verteilt vorgesehen aufweisen. Eine solche Verteilung ist insbesondere bei runden bzw. kreisrunden Baugruppen vorteilhaft, in denen der Bajonettverschluss durch eine Drehbewegung von Bauteilkörper und Befestigungskörper relativ zueinander um eine in der Regel zentrale Drehachse geschlossen wird.

Der Befestigungskörper kann bevorzugt Montagestrukturen aufweisen, um den mit diesem über den Bajonettverschluss verbundenen Bauteilkörper an einer Montagefläche zu befestigen. Insofern kann eine einfache aber wirkungsvolle Befestigungsmöglichkeit des Befestigungskörpers an einer Montagefläche bereitgestellt werden. Bei den Montagestrukturen kann es sich beispielsweise in einfachster Ausgestaltungsform um Durchgangsöffnungen handeln, durch die Befestigungsmittel, wie Schrauben, zur Befestigung des Befestigungskörpers durchgeführt werden können. Darüber hinaus sind auch andere Befestigungsstrukturen, wie beispielsweise Gewinde, Raststrukturen und dergleichen mehr, denkbar.

Gemäß einer besonders bevorzugten Ausgestaltungsform kann die Baugruppe eine Leuchte sein, wobei in diesem Fall der Bauteilkörper bevorzugt ein Leuchtengehäuse aufweist oder ist. Bei der Leuchte kann es sich beispielsweise um eine Einbauleuchte, eine Anbauleuchte oder auch eine Pendelleuchte handeln.

Das Leuchtengehäuse kann bevorzugt ein Leuchtmittel insbesondere zur Lichtabgabe der Leuchte bzw. zur Beleuchtung durch die Leuchte aufweisen. Das Leuchtmittel wiederum kann bevorzugt eine LED oder ein LED-Modul aufweisen. Somit kann in einfacher Weise eine Leuchte als entsprechende Baugruppe bereitgestellt werden.

Das Leuchtengehäuse nimmt bevorzugt wenigstens einen Teil einer Leuchtenelektrik und/oder einer Leuchtenelektronik zum Betrieb der Leuchte auf; mithin wenigstens einen Teil von Leuchtenbetriebselementen. Somit kann in effektiver Weise eine entsprechende Leuchte bereitgestellt werden.

Grundsätzlich ist es denkbar, dass die Baugruppe auch jede andere mögliche und bevorzugt elektrisch betriebene Baugruppe darstellt, wie beispielsweise einen Sensor, eine Kamera, einen Lautsprecher, und dergleichen mehr. Der Bauteilkörper kann dann bevorzugt ein entsprechendes Baugruppengehäuse aufweisen oder sein. In einem solchen Baugruppengehäuse kann dann bevorzugt wenigstens ein Teil von Baugruppenbetriebselementen (bspw. wenigstens ein Teil von einer Baugruppenelektrik und/oder einer Baugruppenelektronik) zum Betrieb der Baugruppe aufgenommen sein.

Im Übrigen kann auch der Befestigungskörper wenigstens einen Teil der Baugruppenbetriebselemente (bspw. Baugruppenelektrik und/oder Baugruppenelektronik) bzw. der Leuchtenbetriebselemente (bspw. Leuchtenelektrik und/oder Leuchtenelektronik) zum Betrieb der Leuchte tragen oder aufnehmen.

Weitere Ausgestaltungen und Vorteile der vorliegenden Erfindung werden nun anhand der Figuren der begleitenden Zeichnungen beschrieben. Es zeigen:
- Fig. 1: eine Seitenansicht einer erfindungsgemäßen Baugruppe (Leuchte) in einem zusammengebauten Zustand,
- Fig. 2: eine perspektivische Ansicht der Baugruppe gemäß Fig. 1 im getrennten Zustand,
- Fig. 3: eine perspektivische Ansicht der Baugruppe gemäß Fig. 2,
- Fig. 4: eine perspektivische Ansicht sowie eine Detailansicht der Baugruppe gemäß Fig. 2 in einem ersten Montageschritt,
- Fig. 5: eine perspektivische Ansicht der Baugruppe gemäß Fig. 4 in einem zweiten Montageschritt,
- Fig. 6: eine perspektivische Ansicht sowie eine Detailansicht der Baugruppe gemäß Fig. 5 in einem dritten Montageschritt,
- Fig. 7: eine perspektivische Ansicht der Baugruppe gemäß Fig. 6 in einem vierten Montageschritt zur Erzielung des zusammengebauten Zustands gemäß Fig. 1,
- Fig. 8: eine perspektivische Ansicht der Baugruppe gemäß Fig. 1 in einem ersten Demontageschritt,
- Fig. 9: eine perspektivische Ansicht sowie eine Detailansicht der Baugruppe gemäß Fig. 8 in einem zweiten Demontageschritt,
- Fig. 10: eine perspektivische Ansicht der Baugruppe gemäß Fig. 9 in einem dritten Demontageschritt zur Erzielung des demontierten Zustands gemäß Fig. 2,
- Fig. 11: eine seitliche Teilansicht der Baugruppe gemäß Fig. 1 nach Abschluss des zweiten Montageschritts gemäß Fig. 5 (Fig. 11A), dies mit teiltransparentem Bauteilkörper zur Verdeutlichung des Bajonettverschlusses (Fig. 11B), am Ende des dritten Montageschritts gemäß Fig. 6 (Fig. 11C), und am Ende des vierten Montageschritts gemäß Fig. 7 in dem Zustand gemäß Fig. 1 (Fig. 11D),
- Fig. 12: eine perspektivische Ansicht eines Befestigungskörpers einer Baugruppe gemäß einem zweiten Ausführungsbeispiel der vorliegenden Erfindung, und
- Fig. 13: eine perspektivische Ansicht der Baugruppe gemäß Figur 12 mit teiltransparentem Bauteilkörper in der Darstellung während des zweiten Montageschritts.

Die Figuren zeigen zwei Ausführungsbeispiele einer erfindungsgemäßen Baugruppe 1. Die Baugruppe 1 weist einen Bauteilkörper 2 sowie einen Befestigungskörper 3 zur Befestigung des Bauteilkörpers 2 auf.

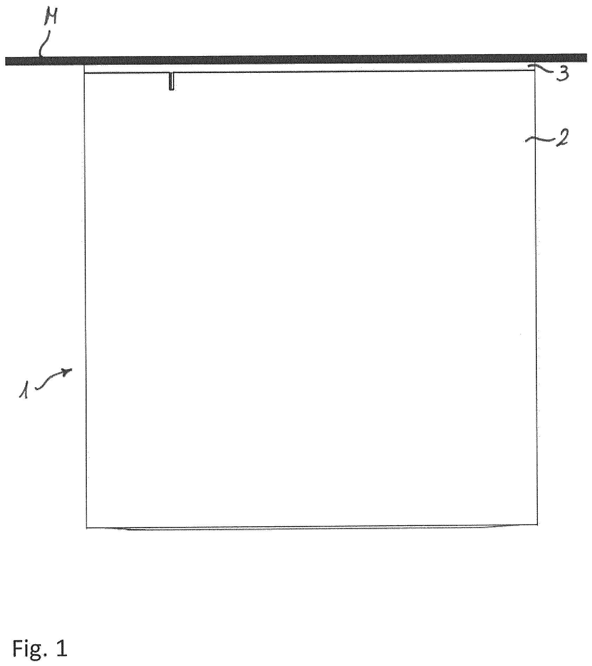

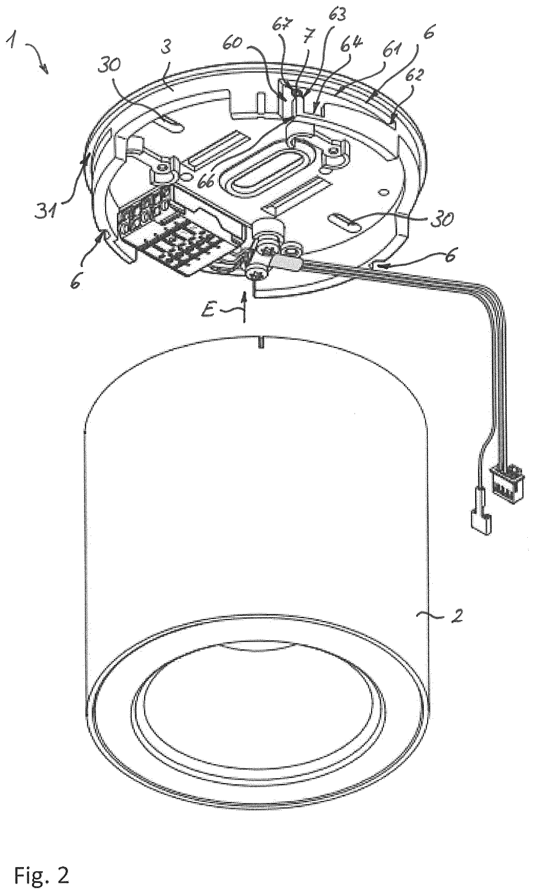

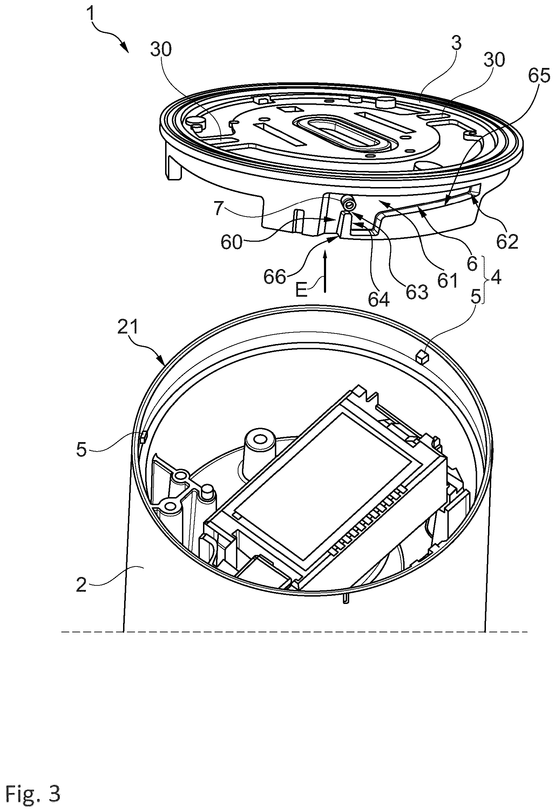

Bei der Baugruppe kann es sich um jegliche Form von Baugruppen handeln. Bevorzugt handelt es sich bei der Baugruppe um eine elektrisch betriebene Baugruppe. Beispielsweise kann die Baugruppe 1 gemäß einer bevorzugten Ausgestaltungsform eine Leuchte sein, wie sie in den dargestellten Ausführungsbeispielen gezeigt ist. Der Bauteilkörper 2 kann dann bevorzugt ein Leuchtengehäuse aufweisen oder sein, wie dies insbesondere den Figuren 1 und 2 zu entnehmen ist. Das Leuchtengehäuse 2 kann bevorzugt ein Leuchtmittel aufweisen. Das Leuchtmittel kann bevorzugt eine LED oder ein LED-Modul aufweisen. Ferner kann das Leuchtengehäuse 2 wenigstens einen Teil von Leuchtenbetriebselementen, wie einer Leuchtenelektrik und/oder einer Leuchtenelektronik, zum Betrieb der Leuchte 1 aufnehmen, wie beispielsweise eine entsprechende Verkabelung oder einen Leuchtentreiber und dergleichen mehr, wie dies in Figur 3 beispielhaft gezeigt ist.

Wie insbesondere den Figuren 2-12 zu entnehmen ist, ist der Bauteilkörper 2 mit dem Befestigungskörper 3 über einen Bajonettverschluss 4 der Baugruppe 1 verbindbar.

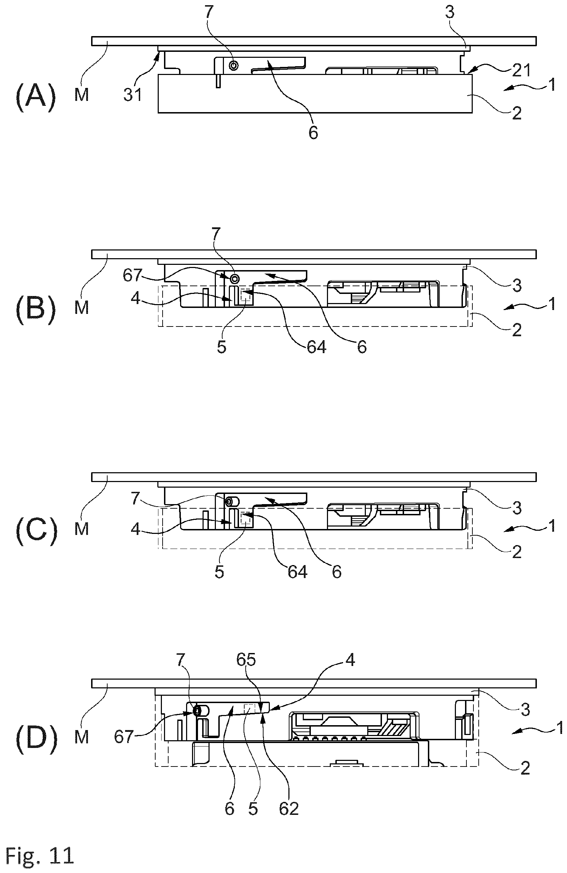

Der Befestigungskörper 3 kann bevorzugt Montagestrukturen 30 aufweisen, um den mit dem Befestigungskörper 3 über den Bajonettverschluss 4 verbundenen Bauteilkörper 2 an einer beispielsweise in den Figuren 1 und 11 schematisch dargestellten Montagefläche M zu befestigen.

Die Baugruppe 1 kann an zwei gegenüberliegenden Seiten jeweils wenigstens einen der Bajonettverschlüsse 4 aufweisen. Dies ist insbesondere bei einer eckigen (mithin beispielsweise einer quadratischen oder rechteckigen) Baugruppe 1 vorteilhaft.

Die Baugruppe 1 kann mehrere der Bajonettverschlüsse 4 entlang eines Kreises und vorzugsweise über diesen Kreis gleichmäßig verteilt vorgesehen aufweisen, wie dies beispielsweise in den dargestellten Ausführungsbeispielen der Fall ist. In den dargestellten Ausführungsbeispielen sind hier drei über einen Kreis bzw. über den Umfang gleichmäßig verteilte Bajonettverschlüsse 4 vorgesehen. Dies ist insbesondere bei runden Baugruppen 1 vorteilhaft, wie sie in den Ausführungsbeispielen gezeigt sind.

Insgesamt kann somit die Baugruppe 1 einen oder auch mehrere der Bajonettverschlüsse 4 aufweisen, wobei die mehreren Bajonettverschlüsse 4 dann bevorzugt symmetrisch oder gleichmäßig verteilt vorgesehen sind.

Der Bajonettverschluss 4 weist einen - hier beispielsweise Bauteilkörper-seitigen - Bajonettvorsprung 5 auf. Der Bajonettvorsprung 5 weist hier einen eckigen bzw. quadratischen Querschnitt in dessen Vorsprungsrichtung gesehen auf, wie dies beispielhaft in den Figuren 3, 11 und 13 ersichtlich ist. Grundsätzlich sind auch andere Querschnittsformen des Bajonettvorsprungs 5 denkbar; beispielsweise ein runder Querschnitt in dessen Vorsprungsrichtung gesehen. Der Bajonettvorsprung 5 kann bevorzugt als Stift oder als Klotz ausgebildet sein.

Der Bajonettverschluss 4 weist bevorzugt ferner eine - hier beispielsweise Befestigungskörper-seitige - Bajonettnut 6 auf, in und entlang welcher der Bajonettvorsprung 5 führbar ist, wie dies beispielsweise aus der Schrittfolge der Figuren 11A-11D ersichtlich ist.

Gemäß einer bevorzugten Ausgestaltungsform, wie auch in den Ausführungsbeispielen gezeigt, kann der Bauteilkörper 2 den Bajonettvorsprung 5 und der Befestigungskörper 3 die Bajonettnut 6 aufweisen.

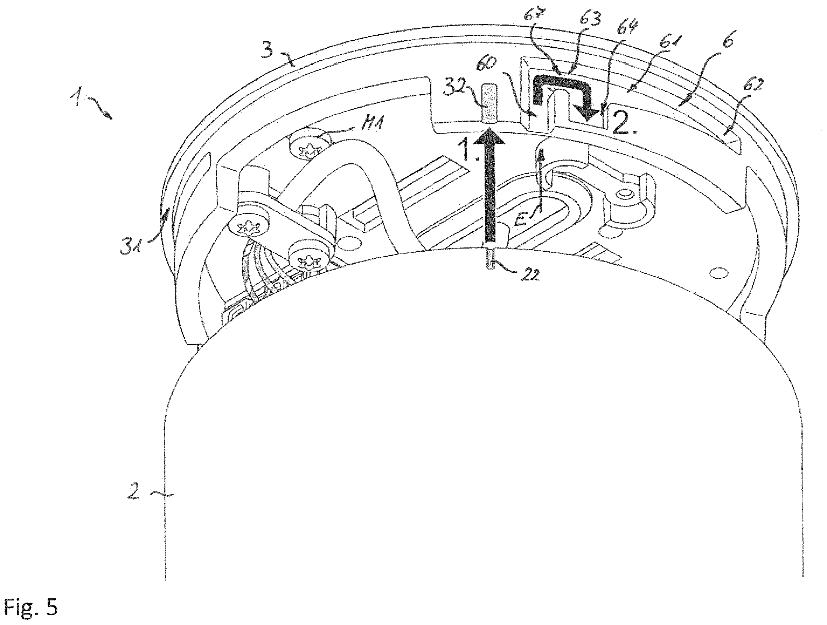

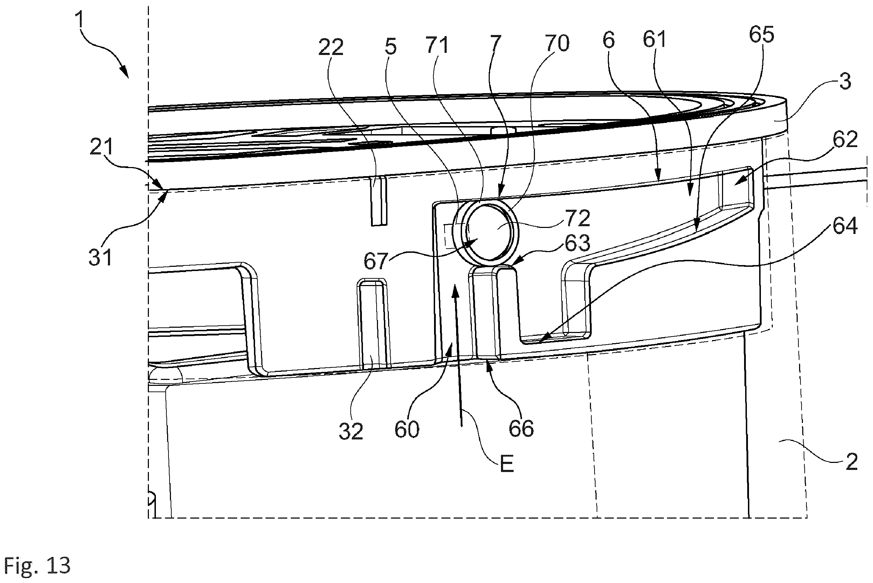

Die Bajonettnut 6 weist einen Einführabschnitt 60 auf, über den der Bajonettvorsprung in einer Einführrichtung E in die Bajonettnut 6 einführbar ist, wie dies beispielsweise in den Figuren 5 und 13 angedeutet ist.

Die Bajonettnut 6 weist des Weiteren einen Funktionsabschnitt 61 auf, welcher sich seitlich bezüglich der Einführrichtung E vom Einführabschnitt 60 weg erstreckt und an einem distalen Ende desselben in einen Verriegelungsabschnitt 62 zum Festlegen des Bajonettvorsprungs 5 mündet, in dem der Bajonettvorsprung 5 in einer Verriegelungsposition (vgl. Fig. 1 und 11D) festlegbar ist.

Der Funktionsabschnitt 61 verjüngt sich zum Verriegelungsabschnitt 62 hin, wie dies insbesondere den Figuren 2-5 und 11-13 zu entnehmen ist.

Der Funktionsabschnitt 61 weist bevorzugt eine in Einführrichtung E weisende und sich zum Verriegelungsabschnitt 62 hin in Einführrichtung E geneigte Anlaufschräge 65 auf. Diese kommt bevorzugt beim Einführen des Bajonettvorsprungs 5 in den Funktionsabschnitt 61 zum Verriegelungsabschnitt 62 hin mit dem Bajonettvorsprung 5 in Anlage, um den Bajonettvorsprung in der Verriegelungsposition entsprechend festzulegen.

Der Bauteilkörper 2 und der Befestigungskörper 3 weisen bevorzugt jeweils bezüglich der Einführrichtung E aufeinander zu gerichtete Anlageseiten 21, 31 auf. Der Bajonettverschluss 4 ist dabei derart ausgebildet, dass die Anlageseiten 21, 31 in der Verriegelungsposition (vgl. Fig. 11D) gegeneinandergedrückt sind; dies vorzugsweise durch Abstützung des Bajonettvorsprungs 5 gegenüber dem Verriegelungsabschnitt 62 bzw. der Anlaufschräge 65.

In einer bevorzugten aber hier nicht dargestellten Ausgestaltungsform kann die Baugruppe 1 eine Dichtung aufweisen, welche bevorzugt umlaufend geschlossen zwischen den beiden Anlageseiten 21, 31 vorgesehen bzw. eingepresst ist, um zwischen diesen in der Verriegelungsposition eine Abdichtung der Baugruppe 1 zu erzeugen.

Wie insbesondere den Figuren 1 und 11D zu entnehmen ist, kann die Baugruppe 1 bevorzugt derart ausgebildet sein, dass die Bajonettnut 6 in der Verriegelungsposition vollständig abgedeckt ist; dies hier vorzugsweise durch den Bauteilkörper 2.

Wie ebenso in den Figuren 1 und 11D gezeigt ist, kann der Bauteilkörper 2 den Befestigungskörper 3 in der Verriegelungsposition wenigstens teilweise (wie hier gezeigt) oder auch vollständig aufnehmen.

Die Bajonettnut 6 weist des Weiteren einen Blockierabschnitt 63 auf, welcher den Funktionsabschnitt 61 mit dem Einführabschnitt 60 verbindet. Der Blockierabschnitt 63 kann dabei dem Einführabschnitt 60 in Einführrichtung E nachgelagert vorgesehen sein oder, wie in den dargestellten Ausführungsbeispielen gezeigt, seitlich von dem Einführabschnitt 60 abzweigen, um so in den Funktionsabschnitt 61 überzugehen (vgl. beispielsweise Figuren 2, 3 und 12). In den hier dargestellten Ausführungsbeispielen zweigt der Blockierabschnitt 63 bevorzugt von einem bezüglich der Einführrichtung E distalen Ende des Einführabschnitts 60 ab. Der Blockierabschnitt 63 kann vorzugsweise von einem einer Einführöffnung 66 für den Bajonettvorsprung 5 (zum Einführen) in die Bajonettnut 6 gegenbüberliegenden Ende des Einführabschnitts 60 abzweigen.

Die Bajonettnut 6 weist des Weiteren einen zwischen dem Blockierabschnitt 63 und dem Verriegelungsabschnitt 62 sich von dem Funktionsabschnitt 61 entgegen der Einführrichtung E weg erstreckenden Taschenabschnitt 64, in welchem der Bajonettvorsprung 5 in einer Halteposition wenigstens teilweise oder vollständig aufnehmbar ist.

Die Baugruppe 1 weist ferner ein Blockierelement 7 auf, welches wahlweise in dem Blockierabschnitt 63 in einer Blockierposition derart positionierbar ist, um einen Durchgang 67 in der Bajonettnut 6 zwischen dem Einführabschnitt 60 und dem Funktionsabschnitt 61 für den Bajonettvorsprung 5 zu blockieren.

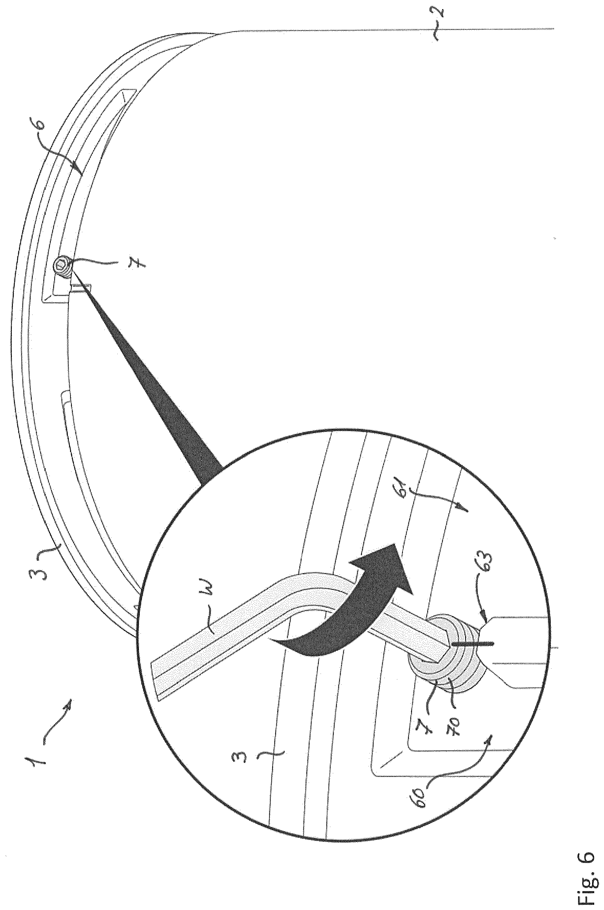

Die Baugruppe 1 ist dabei derart ausgebildet, dass der Blockierabschnitt 63 in der Halteposition wenigstens derart teilweise freigelegt ist, um das Blockierelement 7 in dem Blockierabschnitt 63 zu positionieren, wie dies beispielhaft in den Figuren 6, 9, 11A-11C, 12 und 13 gezeigt ist. Mithin führt das Einführen des Bajonettvorsprungs 5 in den Taschenabschnitt 64 zu einem relative Versatz von Bauteilkörper 2 und Befestigungskörper 3 entgegen der Einführrichtung E, wodurch in dieser Halteposition der Blockierabschnitt 63 zum Positionieren des Blockierelements 7 entsprechend freigelegt ist.

Zum Positionieren des Blockierelements 7 in dem Blockierabschnitt 63 in der Blockierposition kann das Blockierelement 7 beispielsweise überhaupt vorgesehen bzw. angebracht werden; dies bevorzugt lösbar.

Das Blockierelement 7 kann auch derart - beispielsweise an dem Befestigungskörper 3 - vorgesehen sein, um wenigstens in der Halteposition (bevorzugt aber auch im zerlegten Zustand der Baugruppe 1; bspw. gemäß Figuren 2 und 3) wahlweise zwischen der Blockierposition (vgl. Fig. 6-8, 11C, 11D, 12 und 13) und einer Freigabeposition (vgl. Fig. 2-5, 9, 10, 11A und 11B), in der das Blockierelement 7 den Durchgang 67 in der Bajonettnut 6 zwischen dem Einführabschnitt 60 und dem Funktionsabschnitt 61 für den Bajonettvorsprung 5 freigibt, bewegbar zu sein.

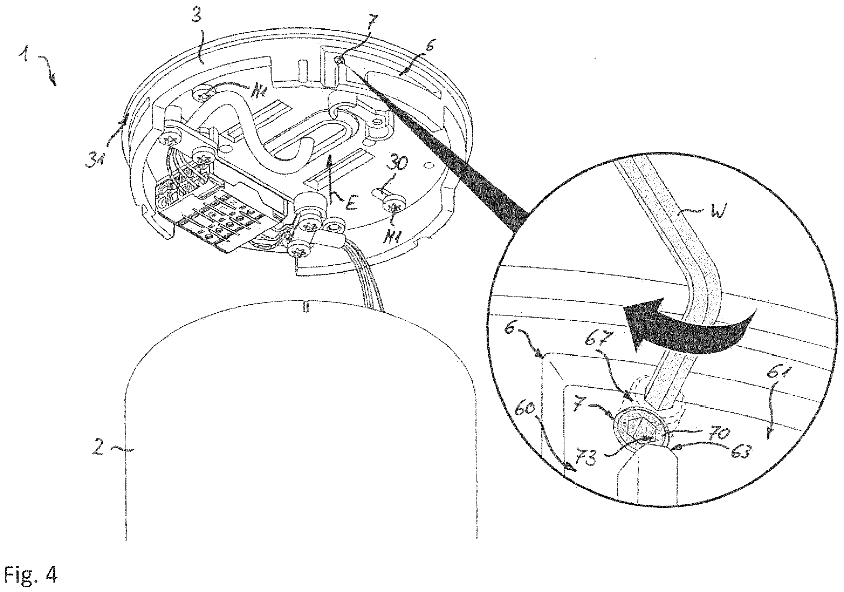

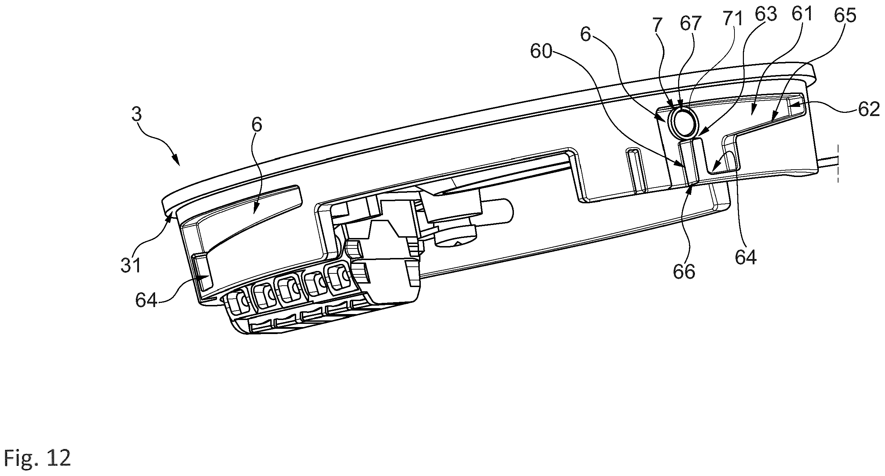

Das Blockierelement 7 kann beispielsweise eine Schraube 70 aufweisen (vgl. Fig. 12 und 13) oder sein (vgl. Fig. 2-11). In dem hier dargestellten Ausführungsbeispiel der Figuren 2-11 ist das Blockierelement 7 bzw. die Schraube 70 als Gewindestift ausgebildet. Die Schraube 70 kann dann derart ausgebildet und vorgesehen sein, um durch eine Schaubbewegung der Schraube 70 zwischen der Blockierposition und der Freigabeposition bewegt zu werden, wie dies beispielsweise durch die Detaildarstellungen in den Figuren 4, 6 und 9 gezeigt ist.

Das Blockierelement 7 bzw. die Schraube 70 kann bevorzugt ein Schraubenmitnahmeprofil 73 (beispielsweise einen Schlitz, einen Kreuzschlitz, einen Innensechskant (wie dargestellt), einen Innensechsrund, etc.) aufweisen, um das Blockierelement 7 in einfacher Weise und mit gängigen Werkzeugen W in ein entsprechendes Gewinde - hier auf Seiten des Befestigungskörpers 3 - einzudrehen bzw. zwischen der Blockierposition und der Freigabeposition zu bewegen (vgl. bspw. die Detaildarstellungen der Figuren 4, 6 und 9).

Das Blockierelement 7 kann gemäß dem hier dargestellten zweiten Ausführungsbeispiel der Figuren 12 und 13 beispielsweise auch ein Druckstück 71 mit einem beweglichen Druckteil 72 aufweisen. Das Druckteil 72 kann dabei bevorzugt mit einer Druckfeder in die Blockierposition vorgespannt sein, um den Durchgang 67 in der Bajonettnut 6 zwischen dem Einführabschnitt 60 und dem Funktionsabschnitt 61 für den Bajonettvorsprung 5 zu blockieren, wie dies in den Figuren 12 und 13 beispielhaft gezeigt ist. Das Druckstück 71 kann bevorzugt derart ausgebildet und vorgesehen sein, dass das Druckteil 72 entgegen der Vorspannung der Druckfeder wahlweise von der Blockierposition in die Freigabeposition überführbar ist. Das Druckstück 71 kann ein Außengewinde und somit eine Schraube 70 aufweisen, um - hier bspw. in den Befestigungskörper 3 im Bereich des Blockierabschnitts 63 bzw. des Durchgangs 67 eingeschraubt - in der Einbauposition gemäß den Figuren 12 und 13 bereitgestellt zu sein. Auch ist es denkbar, dass das Druckstück 71 kraftschlüssig (bspw. durch Selbstklemmung) in der Baugruppe 1 aufgenommen wird, um - hier bspw. in den Befestigungskörper 3 im Bereich des Blockierabschnitts 63 bzw. des Durchgangs 67 eingesetzt bzw. eingepresst - in der Einbauposition gemäß den Figuren 12 und 13 bereitgestellt zu sein.

Die Baugruppe 1 weist bevorzugt in Einführrichtung E gesehen eine eckige, vorzugsweise eine viereckige (beispielsweise quadratische oder rechteckige) Grundform oder Kontur auf. Alternativ ist es auch denkbar, dass die Baugruppe 1 in Einführrichtung E gesehen eine runde, vorzugsweise kreisrunde, Grundform oder Kontur aufweist, wie dies in den Ausführungsbeispielen der Figuren 1-13 gezeigt ist. Grundsätzlich ist die vorliegende Erfindung auf keine bestimmte Grundform oder Kontur der Baugruppe 1 beschränkt.

Ein Verfahren zur Montage bzw. Demontage einer erfindungsgemäßen Baugruppe 1 wird im Folgenden beschrieben.

Zunächst werden der Bauteilkörper 2 sowie der Befestigungskörper 3 bereitgestellt.

Der Befestigungskörper 3 kann dann optional an einer Montagefläche M befestigt werden. Hierzu könne bspw. Schrauben M1 durch die Montagestrukturen 30 in die Montagefläche M geschraubt werden (vgl. bspw. Fig. 4).

Sodann kann das Blockierelement 7 in die Freigabeposition bewegt werden, um den Durchgang 67 in der Bajonettnut 6 zwischen dem Einführabschnitt 60 und dem Funktionsabschnitt 61 für den Bajonettvorsprung 5 freizugeben, wie dies in der Detaildarstellung der Figur 4 beispielhaft gezeigt ist. Das hier als Gewindestift ausgeführte Blockierelement 7 kann hierzu mit einem Werkzeug W bewegt werden; hier in den Befestigungskörper 3 hinein geschraubt werden.

Sodann wird der Bajonettvorsprung 5 in die Bajonettnut 6 über deren Einführabschnitt 60 in Einführrichtung E eingeführt (vgl. Fig. 5 und 13). Um den Bauteilkörper 2 zu dem Befestigungskörper 3 vor dem Zusammenführen in einfacher Weise relativ zueinander zu positionieren, können die beiden Bauteile jeweils eine Positioniermarkierung 22, 32 aufweisen, welche dem Monteur eine korrekte relative Positionierung dieser Bauteile 2, 3 anzeigt. (vgl. Pfeil 1. in Fig. 5).

Der Bajonettvorsprung 5 wird also in die Bajonettnut 6 in Einführrichtung E eingeführt und von dem Einführabschnitt 60 über den nun freigelegten Durchgang im Blockierabschnitt 63 in den Funktionsabschnitt 61 eingeführt, wie dies durch den Pfeil 2. in Figur 5 gezeigt ist. Dort wird der Bajonettvorsprung 5 entgegen der Einführrichtung E in den Taschenabschnitt 64 eingeführt bzw. eingehängt und erreicht so die Halteposition. Durch die so erzeugte Relativbewegung von Bauteilkörper 2 zu Befestigungskörper 3 entgegen der Einführrichtung E wird der Blockierabschnitt 63 in der Halteposition entsprechend freigelegt, wie dies in Figuren 6, 11A und 11B gezeigt ist.

Sodann wird das Blockierelement 7 in dem Blockierabschnitt 63 in der Blockierposition positioniert, um den Durchgang 67 in der Bajonettnut 6 zwischen dem Einführabschnitt 60 und dem Funktionsabschnitt 61 für den Bajonettvorsprung 5 zu blockieren. Zum Positionieren des Blockierelements 7 in der Blockierposition wird hier bevorzugt der Gewindestift 70 von der Freigabeposition in die Blockierposition mittels eines Werkzeugs W bewegt bzw. geschraubt, wie dies in der Detaildarstellung der Figur 6 sowie in der Figur 11C beispielhaft gezeigt ist. Der Bajonettvorsprung 5 ist somit in der Bajonettnut 6 gesichert.

In dem Ausführungsbeispiel der Figuren 12 und 13 wird das Druckteil 72 beim Durchführen des Bajonettvorsprungs 5 durch den Blockierabschnitt 63 vorzugsweise mittels des Bajonettvorsprungs 5 in die Freigabeposition bewegt und erlaubt so das Passieren des Durchgangs 67 für den Bajonettvorsprung. Nach dem Passieren wird das Druckteil 72 durch seine Vorspannung wieder in die Blockierposition bewegt. Der Bajonettvorsprung 5 ist somit in der Bajonettnut 6 gesichert.

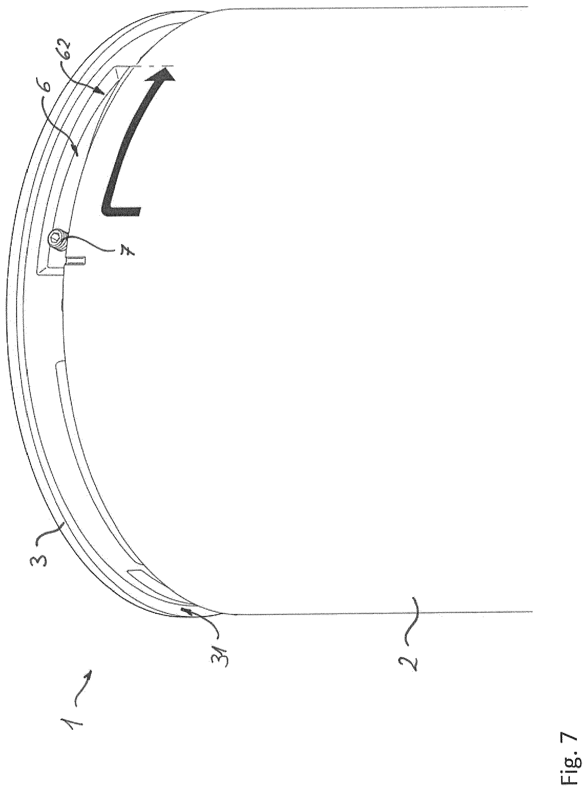

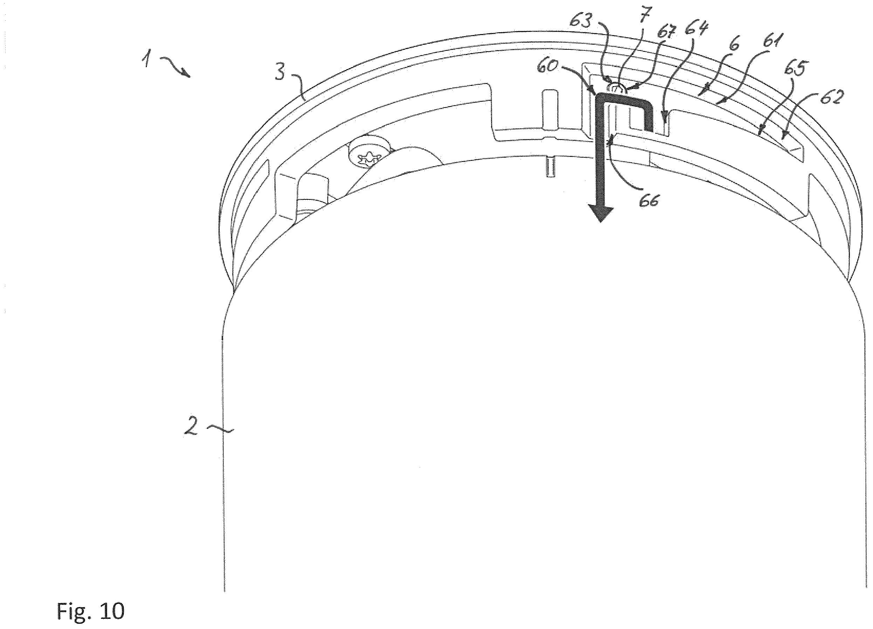

Abschließend wird der Bajonettvorsprung 5 in dem Funktionsabschnitt 61 aus dem Taschenabschnitt 64 und dann seitlich in den Verriegelungsabschnitt 62 geführt, wo der Bajonettvorsprung 5 in der Verriegelungsposition (vgl. Figuren 1 und 10D) festgelegt wird. Dies ist beispielhaft auch durch den Pfeil in Figur 7 dargestellt. Auf diese Weise werden der Bauteilkörper 2 und der Befestigungskörper 3 mittels des Bajonettverschlusses 4 miteinander sicher verbunden. In der Verrieglungsposition kann bevorzugt eine hier nicht dargestellte Dichtung zwischen den Anlageseiten 21, 31 eingeklemmt sein.

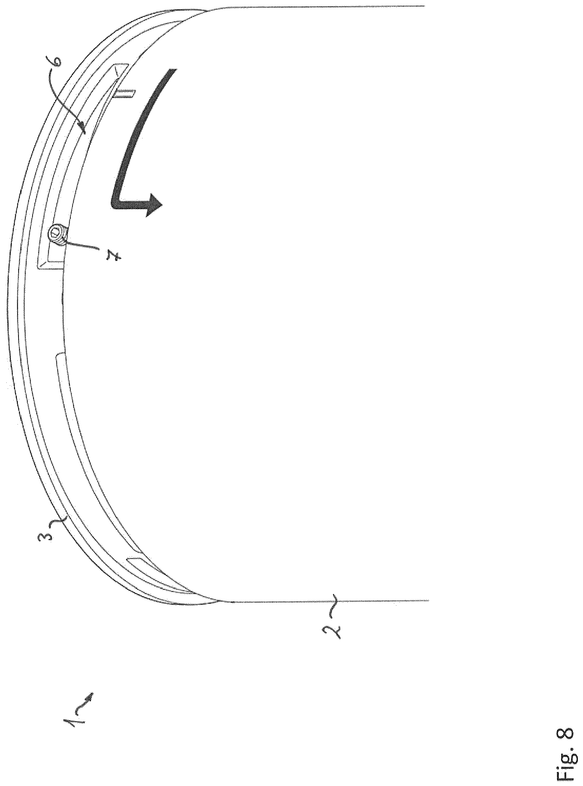

Eine Demontage der Baugruppe 1 wird im Grunde in umgekehrter Reihenfolge der zuvor zur Montage beschriebenen Schritt durchgeführt. Dies ist beispielhaft in den Figuren 8 bis 10 dargestellt.

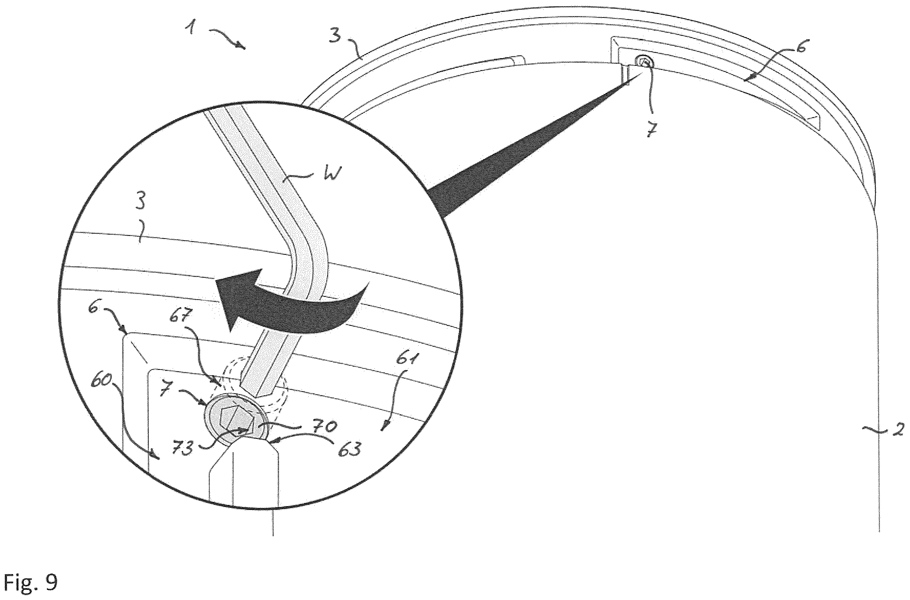

Der Bajonettvorsprung 5 wird folglich in den Taschenabschnitt 64 geführt (vgl. Fig. 8), um so den Blockierabschnitt 63 entsprechend freizulegen. Das Blockierelement 7 wird dann aus dem Durchgang 67 entfernt; hier mittels des Werkzeugs W durch Eindrehen des Gewindestifts 70 in den Befestigungskörper 3 hinein; also in die Freigabeposition (vgl. Fig. 9). Der Bajonettvorsprung 5 wird dann aus dem Taschenabschnitt 64 über den so freigelegten Blockierabschnitt 63 und den Einführabschnitt 60 aus der Bajonettnut 6 geführt (vgl. den Pfeil in Fig. 10).

Die vorliegende Erfindung ist auf die vorbeschriebenen Ausführungsbeispiele nicht beschränkt, sofern sie vom Gegenstand der folgenden Ansprüche umfasst ist.

## Patentansprüche

1. Baugruppe (1) aufweisend:
einen Bauteilkörper (2), und
einen Befestigungskörper (3) zur Befestigung des Bauteilkörpers (2),
wobei der Bauteilkörper (2) mit dem Befestigungskörper (3) über einen Bajonettverschluss (4) der Baugruppe (1) verbindbar ist,
wobei der Bajonettverschluss (4) aufweist:
• einen Bajonettvorsprung (5), und
• eine Bajonettnut (6), in und entlang welcher der Bajonettvorsprung (5) führbar ist,
wobei die Bajonettnut (6) aufweist:
• einen Einführabschnitt (60), über den der Bajonettvorsprung (5) in einer Einführrichtung (E) in die Bajonettnut (6) einführbar ist,
• einen Funktionsabschnitt (61), welcher sich seitlich bezüglich der Einführrichtung (E) vom Einführabschnitt (60) weg erstreckt und an einem distalen Ende desselben in einem Verriegelungsabschnitt (62) zum Festlegen des Bajonettvorsprungs (5) mündet, in dem der Bajonettvorsprung (5) in einer Verriegelungsposition festlegbar ist, und
• einen Blockierabschnitt (63), welcher den Funktionsabschnitt (61) mit dem Einführabschnitt (60) verbindet,
**dadurch gekennzeichnet, dass**
• die Bajonettnut (6) ferner aufweist: einen zwischen dem Blockierabschnitt (63) und dem Verriegelungsabschnitt (62) sich von dem Funktionsabschnitt (61) entgegen der Einführrichtung (E) weg erstreckenden Taschenabschnitt (64), in welchem der Bajonettvorsprung (5) in einer Halteposition wenigstens teilweise aufnehmbar ist,
wobei die Baugruppe (1) ferner ein Blockierelement (7) aufweist, welches wahlweise in dem Blockierabschnitt (63) in einer Blockierposition positionierbar ist, um einen Durchgang in der Bajonettnut (6) zwischen dem Einführabschnitt (60) und dem Funktionsabschnitt (61) für den Bajonettvorsprung (5) zu blockieren, und
wobei die Baugruppe (1) derart ausgebildet ist, dass der Blockierabschnitt (63) in der Halteposition wenigstens derart teilweise freigelegt ist, um das Blockierelement (7) in dem Blockierabschnitt (63) zu positionieren.

2. Baugruppe (1) nach Anspruch 1, wobei der Bauteilkörper (2) den Bajonettvorsprung (5) und der Befestigungskörper (3) die Bajonettnut (6) aufweist.

3. Baugruppe (1) nach einem der vorhergehenden Ansprüche, wobei das Blockierelement (7) derart vorgesehen ist, um in der Halteposition wahlweise zwischen der Blockierposition und einer Freigabeposition, in der das Blockierelement (7) den Durchgang in der Bajonettnut (6) zwischen dem Einführabschnitt (60) und dem Funktionsabschnitt (61) für den Bajonettvorsprung (5) freigibt, bewegbar ist.

4. Baugruppe (1) nach einem der vorhergehenden Ansprüche, wobei das Blockierelement (7) eine Schraube (70) aufweist oder ist, vorzugsweise ein Gewindestift,
wobei vorzugsweise die Schraube derart ausgebildet und vorgesehen ist, um durch eine Schraubbewegung der Schraube zwischen der Blockierposition und der Freigabeposition, wenn vorhanden, bewegt zu werden.

5. Baugruppe (1) nach einem der vorhergehenden Ansprüche, wobei das Blockierelement (7) ein Druckstück (71) mit einem beweglichen Druckteil (72) aufweist, wobei das Druckteil (72) mit einer Druckfeder in die Blockierposition vorgespannt ist, um den Durchgang in der Bajonettnut (6) zwischen dem Einführabschnitt (60) und dem Funktionsabschnitt (61) für den Bajonettvorsprung (5) zu blockieren,
wobei vorzugsweise das Druckstück (71) derart ausgebildet und vorgesehen ist, dass das Druckteil (72) entgegen der Vorspannung der Druckfeder wahlweise von der Blockierposition in die Freigabeposition, wenn vorhanden, überführbar ist.

6. Baugruppe (1) nach einem der vorhergehenden Ansprüche, wobei der Bauteilkörper (2) den Befestigungskörper (3) in der Verriegelungsposition wenigstens teilweise oder vollständig aufnimmt.

7. Baugruppe (1) nach einem der vorhergehenden Ansprüche, wobei die Baugruppe (1) derart ausgebildet ist, dass die Bajonettnut (6) in der Verriegelungsposition vollständig abgedeckt ist, vorzugsweise durch den Bauteilkörper (2).

8. Baugruppe (1) nach einem der vorhergehenden Ansprüche, wobei der Blockierabschnitt (63) von einem einer Einführöffnung (66) für den Bajonettvorsprung (5) in die Bajonettnut (6) gegenüberliegenden Ende des Einführabschnitts (60) abzweigt, und/oder wobei der Blockierabschnitt (63) von einem bezüglich der Einführrichtung (E) distalen Ende des Einführabschnitts (60) abzweigt.

9. Baugruppe (1) nach einem der vorhergehenden Ansprüche,
wobei der Funktionsabschnitt (61) sich zum Verrieglungsabschnitt hin verjüngt, und/oder
wobei der Funktionsabschnitt (61) eine in Einführrichtung (E) weisende und sich zum Verriegelungsabschnitt (62) hin in Einführrichtung (E) geneigte Anlaufschräge (65) aufweist.

10. Baugruppe (1) nach einem der vorhergehenden Ansprüche, wobei der Bauteilkörper (2) und der Befestigungskörper (3) jeweils bezüglich der Einführrichtung (E) aufeinander zu gerichtete Anlageseiten (21, 31) aufweisen, wobei der Bajonettverschluss (4) derart ausgebildet ist, dass die Anlageseiten (21, 31) in der Verriegelungsposition gegeneinandergedrückt sind, vorzugsweise durch Abstützung des Bajonettvorsprungs (5) gegenüber dem Verriegelungsabschnitt (62) oder der Anlaufschräge (65).

11. Baugruppe (1) nach einem der vorhergehenden Ansprüche, wobei der Bajonettvorsprung (5) einen runden oder eckigen Querschnitt in dessen Vorsprungsrichtung gesehen aufweist, wobei der Bajonettvorsprung (5) vorzugsweise als Stift oder als Klotz ausgebildet ist.

12. Baugruppe (1) nach einem der vorhergehenden Ansprüche,
wobei die Baugruppe (1) in Einführrichtung (E) gesehen eine eckig, vorzugsweise viereckig, Grundform oder Kontur aufweist, oder
wobei die Baugruppe (1) in Einführrichtung (E) gesehen eine runde, vorzugsweise kreisrunde, Grundform oder Kontur aufweist.

13. Baugruppe (1) nach einem der vorhergehenden Ansprüche,
wobei die Baugruppe (1) mehrere der Bajonettverschlüsse (4) aufweist, welche bevorzugt symmetrisch oder gleichmäßig verteilt vorgesehen sind, und/oder
wobei die Baugruppe (1) an zwei gegenüberliegenden Seiten jeweils wenigstens einen der Bajonettverschlüsse (4) aufweist, und/oder
wobei die Baugruppe (1) mehrere der Bajonettverschlüsse (4) entlang eines Kreises und vorzugsweise über diesen Kreis gleichmäßig verteilt vorgesehen aufweist.

14. Baugruppe (1) nach einem der vorhergehenden Ansprüche, wobei der Befestigungskörper (3) Montagestrukturen (30) aufweist, um den mit diesem über den Bajonettverschluss (4) verbundenen Bauteilkörper (2) an einer Montagefläche (M) zu befestigen.

15. Baugruppe (1) nach einem der vorhergehenden Ansprüche, wobei die Baugruppe (1) eine Leuchte ist und der Bauteilkörper (2) ein Leuchtengehäuse aufweist oder ist,
wobei vorzugsweise das Leuchtengehäuse ein Leuchtmittel aufweist, wobei das Leuchtmittel ferner vorzugsweise eine LED oder ein LED-Modul aufweist,
wobei vorzugsweise das Leuchtengehäuse wenigstens einen Teil einer Leuchtenelektrik oder einer Leuchtenelektronik zum Betrieb der Leuchte aufnimmt.

## Claims

1. Assembly (1) comprising:
a component body (2), and
a fastening body (3) for fastening the component body (2),
wherein the component body (2) can be connected to the fastening body (3) via a bayonet closure (4) of the assembly (1),
wherein the bayonet closure (4) comprises:
• a bayonet projection (5), and
• a bayonet groove (6), in and along which the bayonet projection (5) can be guided, wherein the bayonet groove (6) comprises:
• an insertion portion (60), via which the bayonet projection (5) can be inserted into the bayonet groove (6) in an insertion direction (E),
• a functional portion (61) which extends laterally with respect to the insertion direction (E) away from the insertion portion (60) and opens at a distal end thereof in a locking portion (62) for securing the bayonet projection (5), in which the bayonet projection (5) can be secured in a locking position, and
• a blocking portion (63) which connects the functional portion (61) to the insertion portion (60),
**characterized in that**
• the bayonet groove (6) further comprises: a pocket portion (64) extending between the blocking portion (63) and the locking portion (62) away from the functional portion (61) counter to the insertion direction (E), in which pocket portion the bayonet projection (5) can be at least partially received in a holding position,
wherein the assembly (1) further comprises a blocking element (7) which can be selectively positioned in a blocking position in the blocking portion (63), in order to block a passage for the bayonet projection (5) in the bayonet groove (6) between the insertion portion (60) and the functional portion (61), and
wherein the assembly (1) is designed such that the blocking portion (63) is at least partially exposed in the holding position so as to position the blocking element (7) in the blocking portion (63).

2. Assembly (1) according to claim 1, wherein the component body (2) comprises the bayonet projection (5) and the fastening body (3) comprises the bayonet groove (6).

3. Assembly (1) according to either of the preceding claims, wherein the blocking element (7) is provided in such a way that in the holding position it can be moved selectively between the blocking position and a release position in which the blocking element (7) releases the passage for the bayonet projection (5) in the bayonet groove (6) between the insertion portion (60) and the functional portion (61).

4. Assembly (1) according to any of the preceding claims, wherein the blocking element (7) comprises or is a bolt (70), preferably a threaded pin,
wherein the bolt is preferably designed and provided to be moved between the blocking position and the release position, if present, by a screwing movement of the bolt.

5. Assembly (1) according to any of the preceding claims, wherein the blocking element (7) comprises a pressure piece (71) having a movable pressure part (72), wherein the pressure part (72) is preloaded into the blocking position by a compression spring in order to block the passage for the bayonet projection (5) in the bayonet groove (6) between the insertion portion (60) and the functional portion (61),
wherein the pressure piece (71) is preferably designed and provided in such a way that the pressure part (72) can be selectively transferred from the blocking position into the release position, if present, counter to the preload of the compression spring.

6. Assembly (1) according to any of the preceding claims, wherein the component body (2) at least partially or completely receives the fastening body (3) in the locking position.

7. Assembly (1) according to any of the preceding claims, wherein the assembly (1) is designed such that the bayonet groove (6) is completely covered in the locking position, preferably by the component body (2).

8. Assembly (1) according to any of the preceding claims, wherein the blocking portion (63) branches off from an end of the insertion portion (60) that is opposite an insertion opening (66) for the bayonet projection (5) into the bayonet groove (6), and/or wherein the blocking portion (63) branches off from an end of the insertion portion (60) that is distal with respect to the insertion direction (E).

9. Assembly (1) according to any of the preceding claims,
wherein the functional portion (61) tapers toward the locking portion, and/or
wherein the functional portion (61) comprises a run-on slope (65) pointing in the insertion direction (E) and inclined toward the locking portion (62) in the insertion direction (E).

10. Assembly (1) according to any of the preceding claims, wherein the component body (2) and the fastening body (3) each have contact faces (21, 31) directed toward one another with respect to the insertion direction (E), wherein the bayonet closure (4) is designed such that the contact faces (21, 31) are pressed against one another in the locking position, preferably by supporting the bayonet projection (5) against the locking portion (62) or the run-on slope (65).

11. Assembly (1) according to any of the preceding claims, wherein the bayonet projection (5) has a round or angular cross section, when viewed in its projection direction, wherein the bayonet projection (5) is preferably designed as a pin or as a block.

12. Assembly (1) according to any of the preceding claims,
wherein the assembly (1) has an angular, preferably square, basic shape or contour when viewed in the insertion direction (E), or
wherein the assembly (1) has a round, preferably circular, basic shape or contour when viewed in the insertion direction (E).

13. Assembly (1) according to any of the preceding claims,
wherein the assembly (1) comprises a plurality of the bayonet closures (4), which are preferably provided so as to be symmetrically or evenly distributed, and/or
wherein the assembly (1) comprises at least one of the bayonet closures (4) on each of two opposite sides, and/or
wherein the assembly (1) comprises a plurality of bayonet closures (4) distributed along a circle and preferably evenly over this circle.

14. Assembly (1) according to any of the preceding claims, wherein the fastening body (3) comprises mounting structures (30) in order to fasten the component body (2) connected thereto via the bayonet closure (4) to a mounting surface (M).

15. Assembly (1) according to any of the preceding claims, wherein the assembly (1) is a luminaire and the component body (2) comprises or is a luminaire housing,
wherein the luminaire housing preferably comprises a light source, wherein the light source further preferably comprises an LED or an LED module,
wherein the luminaire housing preferably receives at least a part of a luminaire electrical system or luminaire electronics for operating the luminaire.

## Revendications

1. Ensemble (1) présentant :
un corps de composant (2), et
un corps de fixation (3) permettant de fixer le corps de composant (2),
dans lequel le corps de composant (2) peut être relié au corps de fixation (3) par l'intermédiaire d'une fermeture à baïonnette (4) de l'ensemble (1),
dans lequel la fermeture à baïonnette (4) présente :
• une saillie à baïonnette (5), et
• une rainure à baïonnette (6), dans et le long de laquelle la saillie à baïonnette (5) peut être guidée,
dans lequel la rainure à baïonnette (6) présente :
• une section d'introduction (60) par laquelle la saillie à baïonnette (5) peut être introduite dans une direction d'introduction (E) dans la rainure à baïonnette (6),
• une section fonctionnelle (61) qui s'étend latéralement par rapport à la direction d'introduction (E) en s'éloignant de la section d'introduction (60) et qui se termine au niveau d'une extrémité distale de celle-ci par une section de verrouillage (62) permettant de fixer la saillie à baïonnette (5), dans laquelle section de verrouillage la saillie à baïonnette (5) peut être fixée dans une position de verrouillage, et
• une section de blocage (63) qui relie la section fonctionnelle (61) à la section d'introduction (60),
**caractérisé en ce que**
• la rainure à baïonnette (6) présente en outre : une section de poche (64) s'étendant entre la section de blocage (63) et la section de verrouillage (62) en s'éloignant de la section fonctionnelle (61) à l'encontre de la direction d'introduction (E), dans laquelle section de poche la saillie à baïonnette (5) peut être reçue au moins partiellement dans une position de maintien,
dans lequel l'ensemble (1) présente en outre un élément de blocage (7) qui peut être positionné sélectivement dans la section de blocage (63) dans une position de blocage pour bloquer un passage dans la rainure à baïonnette (6) entre la section d'introduction (60) et la section fonctionnelle (61) pour la saillie à baïonnette (5), et
dans lequel l'ensemble (1) est conçu de telle sorte que la section de blocage (63) est au moins partiellement exposée dans la position de maintien de manière à positionner l'élément de blocage (7) dans la section de blocage (63).

2. Ensemble (1) selon la revendication 1, dans lequel le corps de composant (2) présente la saillie à baïonnette (5) et le corps de fixation (3) présente la rainure à baïonnette (6).

3. Ensemble (1) selon l'une des revendications précédentes, dans lequel l'élément de blocage (7) est prévu de manière à pouvoir être déplacé, dans la position de maintien, sélectivement entre la position de blocage et une position de libération dans laquelle l'élément de blocage (7) libère le passage dans la rainure à baïonnette (6) entre la section d'introduction (60) et la section fonctionnelle (61) pour la saillie à baïonnette (5).

4. Ensemble (1) selon l'une des revendications précédentes, dans lequel l'élément de blocage (7) présente ou est une vis (70), de préférence une tige filetée,
dans lequel, de préférence, la vis est conçue et prévue pour être déplacée par un mouvement de vissage de la vis entre la position de blocage et la position de libération, le cas échéant.

5. Ensemble (1) selon l'une des revendications précédentes, dans lequel l'élément de blocage (7) présente une pièce de pression (71) comportant une pièce de pression mobile (72), dans lequel la pièce de pression (72) est précontrainte dans la position de blocage par un ressort de pression pour bloquer le passage dans la rainure à baïonnette (6) entre la section d'introduction (60) et la section fonctionnelle (61) pour la saillie à baïonnette (5),
dans lequel de préférence la pièce de pression (71) est conçue et prévue de telle sorte que la pièce de pression (72) peut être transférée sélectivement de la position de blocage à la position de libération, le cas échéant, à l'encontre de la précontrainte du ressort de pression.

6. Ensemble (1) selon l'une des revendications précédentes, dans lequel le corps de composant (2) reçoit au moins partiellement ou totalement le corps de fixation (3) dans la position de verrouillage.

7. Ensemble (1) selon l'une des revendications précédentes, dans lequel l'ensemble (1) est conçu de telle sorte que la rainure à baïonnette (6) est entièrement recouverte dans la position de verrouillage, de préférence par le corps de composant (2).

8. Ensemble (1) selon l'une des revendications précédentes, dans lequel la section de blocage (63) bifurque à partir d'une extrémité de la section d'introduction (60) opposée à une ouverture d'introduction (66) pour la saillie à baïonnette (5) dans la rainure à baïonnette (6), et/ou dans lequel la section de blocage (63) bifurque à partir d'une extrémité de la section d'introduction (60) distale par rapport à la direction d'introduction (E).

9. Ensemble (1) selon l'une des revendications précédentes,
dans lequel la section fonctionnelle (61) se rétrécit vers la section de verrouillage, et/ou
dans lequel la section fonctionnelle (61) présente un biseau de démarrage (65) orienté dans la direction d'introduction (E) et incliné vers la section de verrouillage (62) dans la direction d'introduction (E).

10. Ensemble (1) selon l'une des revendications précédentes, dans lequel le corps de composant (2) et le corps de fixation (3) présentent respectivement des côtés d'appui (21, 31) dirigés l'un vers l'autre par rapport à la direction d'introduction (E), dans lequel la fermeture à baïonnette (4) est conçue de telle sorte que les côtés d'appui (21, 31) sont pressés l'un contre l'autre dans la position de verrouillage, de préférence par appui de la saillie à baïonnette (5) par rapport à la section de verrouillage (62) ou au biseau de démarrage (65).

11. Ensemble (1) selon l'une des revendications précédentes, dans lequel la saillie à baïonnette (5) présente une section transversale ronde ou carrée, vue dans sa direction de saillie, dans lequel la saillie à baïonnette (5) est de préférence conçue sous la forme d'une tige ou d'un bloc.

12. Ensemble (1) selon l'une des revendications précédentes,
dans lequel l'ensemble (1), vu dans la direction d'introduction (E), présente une forme de base ou un contour anguleux, de préférence quadrangulaire, ou
dans lequel l'ensemble (1), vu dans la direction d'introduction (E), présente une forme de base ou un contour rond, de préférence circulaire.

13. Ensemble (1) selon l'une des revendications précédentes,
dans lequel l'ensemble (1) présente plusieurs des fermetures à baïonnette (4), lesquelles sont prévues de préférence de manière symétrique ou réparties uniformément, et/ou
dans lequel l'ensemble (1) présente sur deux côtés opposés respectivement au moins une des fermetures à baïonnette (4), et/ou
dans lequel l'ensemble (1) présente plusieurs des fermetures à baïonnette (4) prévues le long d'un cercle et de préférence réparties uniformément sur ce cercle.

14. Ensemble (1) selon l'une des revendications précédentes, dans lequel le corps de fixation (3) présente des structures de montage (30) pour fixer le corps de composant (2) relié à celui-ci par l'intermédiaire de la fermeture à baïonnette (4) sur une surface de montage (M).

15. Ensemble (1) selon l'une des revendications précédentes, dans lequel l'ensemble (1) est un luminaire et le corps de composant (2) présente ou est un boîtier de luminaire,
dans lequel de préférence le boîtier de luminaire présente un moyen d'éclairage, dans lequel le moyen d'éclairage présente en outre de préférence une DEL ou un module DEL,
dans lequel le boîtier de luminaire reçoit de préférence au moins une partie d'un système électrique de luminaire ou d'un système électronique de luminaire pour le fonctionnement du luminaire.
